# EUROPÄISCHE PATENTSCHRIFT

(11) **EP 2 230 008 B1**
(45) Veröffentlichungstag und Bekanntmachung des Hinweises auf die Patenterteilung: **16.11.2011**
(21) Anmeldenummer: 10002593.1
(22) Anmeldetag: 12.03.2010
(51) Int. Cl.: B01J 8/10, B01F 7/00

(54) **Vorrichtung zur kontinuierlichen Fluorierung von Partikeln**
Apparatus for continuous fluorination of particles
Appareil pour la fluorination continue de particles

(30) Priorität: 12.03.2009 DE 102009012944
(43) Veröffentlichungstag der Anmeldung: 22.09.2010
(73) Patentinhaber: Fluor Technik System GmbH, 36341 Lauterbach (DE)
(72) Erfinder: Möller, Bernd, 36341 Lauterbach (DE)
(74) Vertreter: Hebing, Norbert

(56) Entgegenhaltungen:
- DE-A1-102004 031 837

## Beschreibung

Die Erfindung bezieht sich auf eine Vorrichtung zur kontinuierlichen Fluorierung von Partikeln, insbesondere Nanopartikeln mit einem eine Fluorierungskammer aufweisenden Gehäuse, das eine horizontal verlaufende Längsachse, wenigstens einen Gasanschluss zum Einbringen von gasförmigem Fluor und eine Einrichtung zum Feinverteilen der Partikel in der Fluorierungskammer und zum Transport der Partikel in Richtung der Längsachse durch die Fluorierungskammer aufweist, wozu in dem Gehäuse mehrere in Längsrichtung ausgerichtete, jeweils eine Vorder- und eine Rückseite aufweisende Schaufeln in Längsrichtung hintereinander angeordnet sind und ein Antrieb vorgesehen ist, der die Schaufeln in eine um die Längsachse verlaufende Umlaufbewegung zu versetzen vermag, wobei die Schaufeln jeweils einen radial außen liegenden Fuß mit Aufnahmebereichen zum Aufnehmen der Partikel beim Durchlaufen der Tiefphase und einen Kopf mit Schütten zum Freigeben der Partikel beim Durchlaufen der Hochphase der Umlaufbewegung der Partikel besitzen, wobei jeweils Vorder- und Rückseite der Schaufeln zum Aufnehmen und Freigeben der Partikel ausgebildet sind und die Schütten an der Rückseite der Schaufeln jeweils in der Umlaufzone des zugehörigen Fußes liegen.

Eine derartige Vorrichtung ist z. B. in der DE 10 2004 031 837 A1 beschrieben. Die Umlaufzonen sind durch Trennwände voneinander getrennt, wodurch die Übergabe der Partikel nur durch eine zentrale Öffnung in den Trennwänden erfolgen kann. Die Schaufeln setzen sich dazu jeweils zum einen aus einem Steg, der die Partikel innerhalb einer von zwei Trennwänden begrenzten Umlaufzone umwälzt, und zum anderen aus einem Leitblech zusammen, das die Partikel aufnimmt und zur Öffnung leitet. Die Umlaufbewegung der Schaufeln erfolgt stets in eine Richtung, wobei die Transportgeschwindigkeit der Partikel durch das Gehäuse durch das Verhältnis der auf die Längsrichtung bezogenen Breite der Aufnahmebereiche von Steg und Leitblech bestimmt wird.

Eine Vorrichtung zum Fluorieren ist in der DE AS 20 00 830 beschrieben, bei der die Fluorierung in einem Wirbelbett erfolgt. Dabei dient das fluorhaltige Gasgemisch einerseits zur Fluorierung der Partikel, und andererseits dazu, eine Wirbelschicht auszubilden. Hierfür wird eine sehr viel größere Menge benötigt als für die Fluorierung, so dass dieses Verfahren unwirtschaftlich ist.

Die Erfindung beruht somit auf der Aufgabe, eine wirtschaftliche Vorgehensweise darzustellen und hierfür geeignete Vorrichtungen zur Verfügung zu stellen.

Gemäß der Erfindung ist vorgesehen, dass die Schütten an der Vorderseite der Schaufeln jeweils zumindest teilweise in die Umlaufzone der in Transportrichtung benachbart liegenden Schaufel ragen und dass der Antrieb reversierbar ist, so dass die Umlaufbewegung sowohl im als auch gegen den Uhrzeigersinn durchführbar ist.

Mit den Schaufeln werden die Partikel vom Boden der Kammer aufgenommen, zu deren Decke transportiert und dort von den Schaufeln ausgeschüttet, so dass sie von oben nach unten durch die Kammer rieseln und während ihres Sinkfluges feinstverteilt mit dem Fluor im fluorhaltigen Gasgemisch in Kontakt gelangen und dadurch fluoriert werden.

Die Schaufeln sind in Längsrichtung der Fluorierungskammer nebeneinander angeordnet und weisen damit nebeneinanderliegende Umlaufbahnen auf, wobei die Schütten an der Vorderseite der schaufeln gegenüber dem Aufnahmebereich an der Vorderseite der jeweiligen Schaufel in Längsrichtung versetzt liegen. Dadurch wird erreicht, dass die Partikel bei einer Umlaufbewegung mit der Vorderseite der Schaufeln voran in einem Längsabschnitt des Behälters ausgeschüttet werden und zu Boden gelangen, der gegenüber dem eigenen Aufnahmebereich versetzt ist und im Aufnahmebereich der folgenden Schaufel liegt. Auf diese Weise wird ein Transport der Partikel in Längsrichtung der Fluorierungskammer erzielt.

Prinzipiell kann ein besonderes Gestell für die Schaufeln erstellt werden, das innerhalb der Fluorierungskammer angeordnet ist, wobei die Bewegung der Schaufeln innerhalb des Gestells erfolgt. Dabei kann das Gehäuse selbst unbeweglich angeordnet sein. Die Anordnung wird aber besonders einfach, wenn das Gehäuse eine Trommel ist, die liegend angeordnet ist, wobei die Schaufeln jeweils mit ihrem Fuß an der Innenseite der Trommel derart ausgerichtet befestigt sind, dass der Kopf der Schaufeln radial weiter innen liegt, und ein reversierbarer Antrieb für die Trommel vorgesehen ist, der diese in eine Drehbewegung um ihre Längsachse versetzt.

Die Rückseite der Schaufeln ist so gestaltet, dass zwischen dem dortigen Aufnahmebereich und der dortigen Schütte kein Versatz vorliegt, so dass bei einer Drehrichtung mit der Rückseite voran die Partikel aufgenommen werden und in derselben Umlaufzone wieder ausgeschüttet werden, so dass kein Partikeltransport in Längsrichtung stattfindet.

Die Transportgeschwindigkeit lässt sich dabei durch das Verhältnis der Dauer der Drehbewegungen in die eine Richtung zur Dauer der Drehbewegung in die andere Richtung beeinflussen.

Die Transportgeschwindigkeit wird außerdem dadurch bestimmt, dass der Aufnahmebereich an der Vorderseite der Schaufeln schmaler ist als der an der Rückseite der Schaufeln.

Die Erfindung erlaubt damit weiterhin den Verzicht auf Trennwände, was die Vorrichtung insgesamt leichter macht und auch eine gleichmäßigere Verteilung des Behandlungsgases, z. B. Fluorgas, in der Kammer erlaubt.

Eine um die Längsachse verlaufende Umlaufbewegung der Schaufeln kann konstruktiv am einfachsten dadurch erreicht werden, dass das.Gehäuse als Trommel ausgebildet ist, die liegend angeordnet ist, wobei die Schaufeln jeweils mit ihrem Fuß an der Innenseite der Trommel derart ausgerichtet befestigt sind, dass der Kopf radial weiter innen liegt, und dass ein reversierbarer Antrieb für die Trommel vorgesehen ist, der diese in eine Drehbewegung um ihre Längsachse versetzt.

Um einen kontinuierlichen Betrieb der Vorrichtung zu gewährleisten, erfolgt die Zufuhr der Partikel zur Fluorierungskammer und deren Entnahme aus der Fluorierungskammer vorzugsweise über Schleusen.

Um die Partikel aus der Trommel ausschleusen zu können, ist wenigstens eine weitere Schaufel vorgesehen, deren Kopf in eine in der Endstirnwand der Trommel ausgebildete zentrale Austrittsöffnung geführt ist.

Die Schaufel ist dabei spiralförmig geführt, so dass die Partikel während der Drehung der Trommel entlang dem Boden der Schaufel bis zum Kopfbereich bewegt werden und dort in die Austrittsöffnung eintreten. An die Austrittsöffnung schließt sich eine Schleuse, vorzugsweise eine Drehschleuse an, so dass die Fluorierungskammer auf unterdruck gehalten werden kann und trotzdem ein kontinuierlicher Betrieb möglich ist. Aus dem gleichen Grund werden die Partikel an der Frontstirnwand der Trommel ebenfalls über eine Schleuse eingebracht, wobei die Trommel an eine Vakuumpumpe angeschlossen ist.

Um den Abschüttvorgang über einen bestimmten winkelbereich zu verteilen, damit eine möglichst breite Verteilung während des Absinkens vorliegt, ist vorgesehen, dass der Boden der Schaufeln und der Schütte mit einem Haftbelag versehen ist. Dies verteilt die vollständige Ausschüttung der Partikel über einen größeren winkelbereich, der von den Schaufeln in der Hochphase durchlaufen werden muss, bevor die Ausschüttung vollständig ist.

Im Folgenden soll anhand eines Ausführungsbeispieles die Erfindung näher erläutert werden. Dazu zeigen:
- Fig. 1: eine schematische Darstellung einer Trommel zur Fluorierung von Nanoparti- keln,
- Fig.2 a, b: jeweils einen Querschnitt durch die Trommel mit einer Anordnung von mehre- ren Schaufeln, wobei Fig. 2a eine Drehbewegung der Trommel zur Aufnahme und Fig. 2b eine entgegengesetzte Drehbewegung zum Durchmischen und Auf- lockern der Nanopartikel veranschau- licht,
- Fig. 3: eine schematische Darstellung der Aus- schleusung von Nanopartikeln aus der Trommel und
- Fig. 4: eine Seitenansicht einer Schaufel.

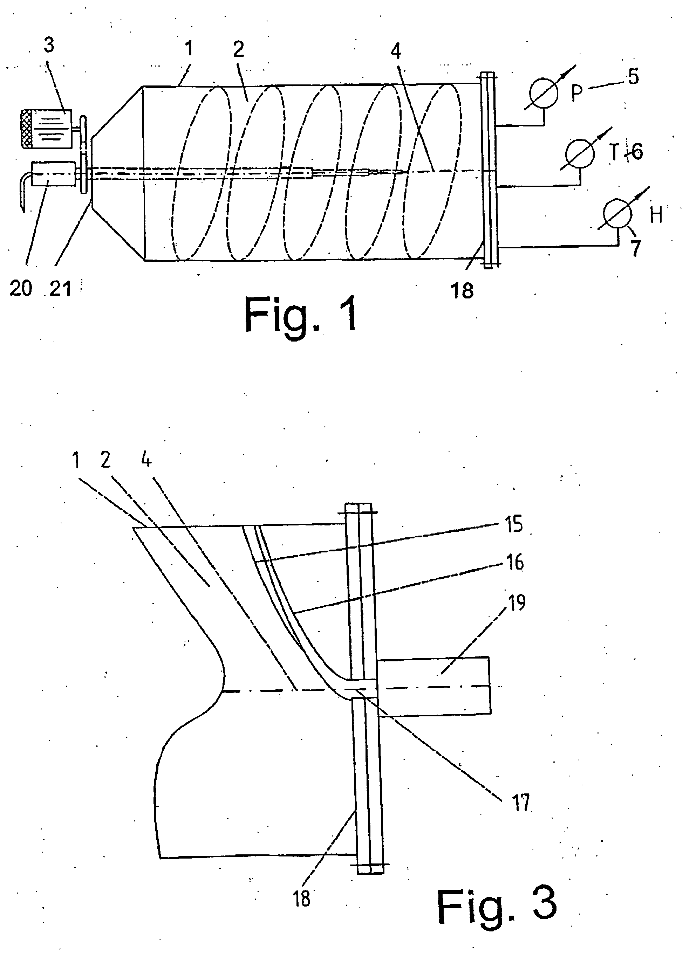

Die Fig. 1 zeigt eine schematische Darstellung einer Trommel 1 zur Fluorierung von Nanopartikeln. Der Innenraum der Trommel 1 bildet eine Fluorierungskammer 2. Die Trommel 1 ist liegend angeordnet und wird von einem Motor 3 um ihre horizontal verlaufende Längsachse in Drehung versetzt, die damit die Drehachse 4 der Trommel 1 bildet. Mittels entsprechender Messinstrumente 5, 6, 7 kann der Druck und die Temperatur in der Trommel 1 und die Fluorkonzentration gemessen werden. Die Trommel ist, was nicht näher dargestellt ist, mit einem Gasanschluss zur Einleitung eines fluorhaltigen Gasgemisches in die Fluorierungskammer 2 und mit einem Vakuumpumpanschluss zur Evakuierung der Fluorierungskammer 2 versehen. Weitere, hier nicht dargestellte Gasanschlüsse machen es möglich, neben Fluor auch andere Gase in die Fluorierungskammer 2 zu leiten, so dass eine für den jeweiligen Zweck angepasste, auf Fluor basierende Gasmischung vorliegt.

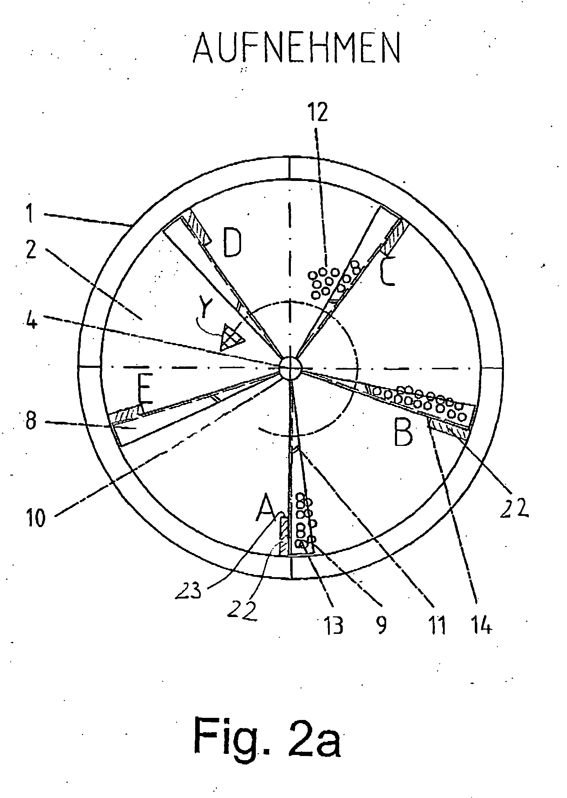

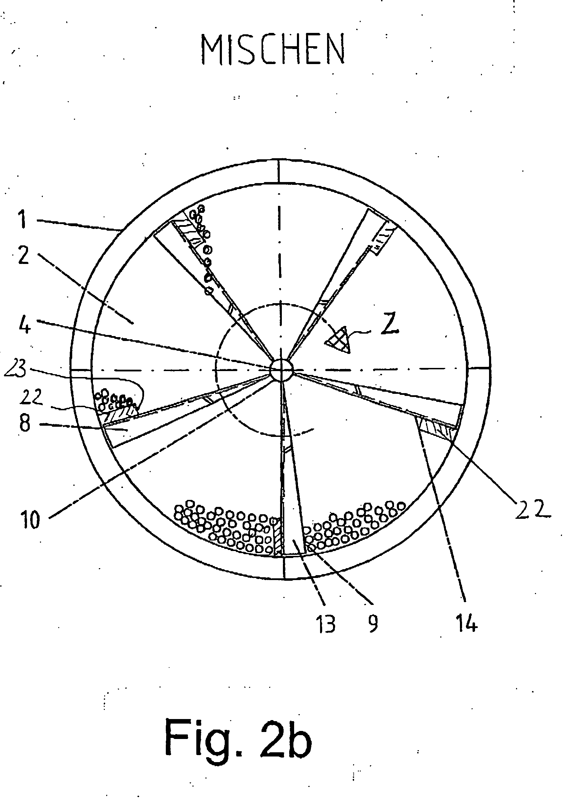

Wie die Fig. 1 und insbesondere der Querschnitt der Fig. 2 zeigt, sind an der Innenseite der Trommel 1 fünf Schaufeln 8 angebracht, die sich mit der Trommel 1 drehen. Jede der dargestellten Schaufeln 8 liegt in einer anderen Querebene der Trommel 1, die Schaufeln sind somit in Längsrichtung als auch in Umfangsrichtung der Trommel 1 gegeneinander versetzt. Grundsätzlich können weitere Schaufeln in Längsrichtung und mehr als zwei Schaufeln in einer Querebene angeordnet werden. Aus Übersichtsgründen sind - auch im Folgenden - die sich auf die gleichartig aufgebauten Schaufeln beziehenden Bezugszeichen 8, 9, 11 bis 15 nur jeweils einmal in den Figuren gezeigt.

Jede Schaufel 8 ist von einem U-förmigen bzw. V-förmigen Profilblech 9 gebildet, das sich von der Trommelwand ausgehend in Richtung auf die Drehachse 4 erstreckt. Die Profilbleche 9 können zur Erhöhung der Stabilität, wie dargestellt, bis zur Drehachse 4 geführt sein und dort mit einer in der Drehachse angeordneten Strebe 10 befestigt werden.

Die offenen Vorderseiten der Profilbleche 9 sind in Umfangsrichtung ausgerichtet. Im Abstand zur Trommelwand ist in jedem Profilblech 9 ein Querblech 11 eingelassen, das den Querschnitt des Profilbleches 9 verschließt und eine Schütte 12 bildet. Die von dem Querblech 11 gebildete Schüttfläche kann in etwa tangential zu einem gedachten Kreis um die Drehachse 4 verlaufen, aber vorzugsweise auch einen Winkel mit diesem einschließen.

Die einzelnen Profilbleche 9 verlaufen nicht exakt in einer senkrecht zu der Drehachse verlaufenden Ebene, sondern geneigt zu einer solchen, so dass der einen Aufnahmebereich bildende Fuß 13 eines jeden Profilbleches 9, mit dem es unmittelbar an die Trommelwand anschließt, gegenüber der Schütte 12 einen Versatz in Längsrichtung der Trommel 1 aufweist. Definiert man die Kreisscheibe, die der Fußbereich durchläuft, als Umlaufzone, so wird durch den Versatz erreicht, dass die Partikel beim Ausschütten über die Schütte 12 jeweils in die benachbarte Umlaufzone gelangen und somit von Schaufel zu Schaufel weitergereicht werden und in Längsrichtung der Trommel 1 transportiert werden.

In der Fig. 2a ist schematisch dargestellt, wie die Partikel aufgenommen werden: Jede der hintereinander angeordneten Schaufeln 8 ist in einer anderen Winkellage gezeigt, wodurch gleichzeitig Positionen A bis E dargestellt sind, die jede einzelne Schaufel 8 bei einer Drehung der Trommel 1 im Uhrzeigersinn (Pfeil Y) um 360° durchläuft.

In der Tiefphase, Position A, in der sich der Fuß 13 der Schaufel 8 am Boden der von der Trommel 1 gebildeten Fluorierungskammer 2 befindet, werden die Partikel von dem Fußbereich der Schaufel, die sich von der Trommelwand zum Schüttblech erstreckt, gesammelt und mit der Schaufel über die Position B (Drehung um ca. 70°) nach oben transportiert. Wenn die Position C erreicht worden ist (Drehung ca. 140°), rutschen die Partikel nach und gegen das Querblech 11 und werden, sobald dieses in etwa horizontal zur Fluorierungskammer 2 ausgerichtet ist, von diesem herunter in die Fluorierungskammer 2 geschüttet. Der Winkel, bei der der Schüttvorgang beginnt, hängt dabei von der Ausrichtung des Querbleches 11 zum Profilblech 9 ab.

Während die Schaufel 8 die Hochphase durchläuft, also sich im Bereich der Decke der Fluorierungskammer 2 befindet und dabei den Zenit der Fluorierungskammer 2 überschreitet, beschleunigt sich die Abschüttung und wird spätestens beendet, wenn das Schüttblech vertikal ausgerichtet ist (was in etwa in der Position D der Fall ist). Anschließend läuft die Schaufel 8 über die Position E zurück in die Ausgangsposition A. Währenddessen rieseln die zwischen den Positionen C und D ausgeschütteten Partikel zurück auf den Boden der Trommel 1.

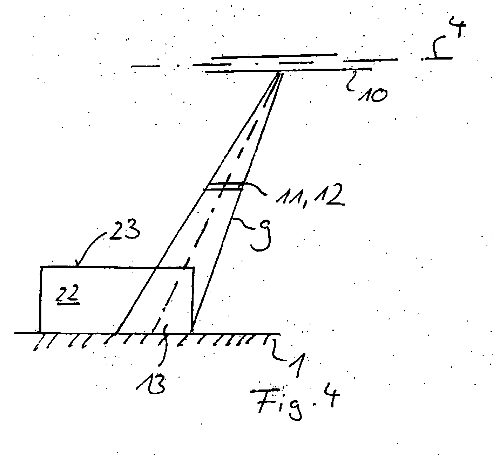

Da, wie oben schon erläutert, die Profilbleche 9 schräg angeordnet sind (siehe Fig. 4), befindet sich die Schütte 12 in Längsrichtung der Trommel 1 gesehen versetzt gegenüber dem Fußbereich, so dass die Partikel entsprechend dieses Versatzes in einem Bereich der Trommel zu Boden gelangen, der gegenüber ihrem Aufnahmebereich am Fuß 13 versetzt liegt, wodurch ein Transport der Partikel in Längsrichtung der Trommel 1 erfolgt. Die Partikel werden dazu von Schaufel zu Schaufel weitergereicht.

Wie in der Fig. 2b gezeigt, sind die Rücken 14 der Profilbleche 9 als Stege 22 ausgebildet, die in etwa senkrecht von der Wand der Trommel 1 abstehen. Der Rand des Stege 22, der an die Trommelwand anschließt, wirkt als ein Aufnahmebereich, der von der Trommelwand entfernte Rand als eine Schütte mit einer Schüttkante 23, wobei der Aufnahmebereich genauso breit wie die Schüttkante 23 und ihr gegenüber nicht versetzt ist. Wird daher die Drehrichtung der Trommel umgekehrt (Pfeil Z), so dass sich die Schaufel 8 mit dem Steg 22 voran durch die Partikel bewegt, werden diese vom Steg 22 aufgenommen und in die ursprüngliche Umlaufzone zurückgeschüttet, sobald der Steg 22 eine bestimmte Höhe erreicht hat. Ein Transport in Längsrichtung findet somit nicht statt. Um das Abschütten vom Steg 22 nicht zu behindern, wird entsprechend Fig. 4 das Profilblech 9 im Bereich der Schüttkante des Stegs 22 schmaler als dieser ausgeführt und/oder das Profilblech so schräg gestellt, dass es zum größte Teil außerhalb der Schüttkante 23 liegt.

Vorzugsweise wird der Aufnahmebereich der Vorderseite der Schaufeln 8 schmaler ausgeführt als der der Rückseite, so dass bei einer Drehrichtung der Trommel 1 in Richtung des Pfeils Y jeweils nur ein Teil der Partikel zur nächsten Umlaufzone transportiert wird. Ein Teil der Partikel wird je nach Ausdehnung der Schütten 12 an der Vorderseite auch wieder in die ursprüngliche Umlaufzone zurückgelangen.

Die Aufenthaltsdauer der Partikel in der Fluorierungskammer 2 kann nun über das Verhältnis der Dauern der jeweiligen Drehrichtungen (Pfeil Y, Z) bestimmt werden, da in dem einen Fall kein Transport und in dem anderen Fall ein Transport in Längsrichtung stattfindet. Je länger die Drehung in Richtung des Pfeiles Z (Fig. 2b) erfolgt, desto kleiner ist der Partikeldurchsatz und desto länger sind die Partikel dem Gas in der Fluorierungskammer 2 ausgesetzt.

In der Fig. 3 ist eine ebenfalls von einem U-förmigen Profilblech 15 gebildete Entnahmeschaufel 16 dargestellt, die über keinen Quersteg verfügt und der Entnahme der fluorierten Partikel aus der Trommel 1 dient. Das Profilblech 15 erstreckt sich von der Trommelwand bis zur Drehachse 4. Es verfügt über keinen Quersteg und ist in sich verdreht, so dass in dem Fußbereich die offene Seite des Profilbleches 15 in Umfangsrichtung und im Bereich der Drehachse 4 in radiale Richtung weist. Außerdem verläuft das Profilblech 15 vom Fuß von der Trommelwand ausgehend zunächst in radiale Richtung und im Bereich der Drehachse in axiale Richtung. Dadurch werden die Partikel nicht wie bei den anderen Schaufeln 8 ausgeschüttet, sondern rutschen den Boden des Profilbleches 15 entlang bis ins Zentrum der Trommel 1. Die Partikel werden dabei von einer radial nach innen gerichteten Bewegung in eine axiale Bewegung übergeleitet und können dann zentral über eine Austrittsöffnung 17 in der Endstirnwand 18 der Trommel 1 mittels einer Schleuse 19, vorzugsweise einer Drehschleuse (siehe auch Fig. 1) aus der Trommel 1 ausgeschleust werden.

Die Übergabe der Partikel in die Trommel 1 erfolgt über eine weitere, ebenfalls als Drehschleuse ausgeführte Schleuse 20 in der Frontstirnwand 21 der Trommel.

Der Betrieb kann kontinuierlich und gesteuert erfolgen, wobei die notwendigen Parameter wie Druck, Temperatur und Fluorkonzentration laufend überwacht und zur Steuerung der Zugabe des fluorhaltigen Gasgemisches über den Gasanschluss, der Menge der über die Schleuse 20 in der Frontstirnwand 21 eingeleiteten Partikel sowie der an den Vakuumpumpanschluss angeschlossenen Vakuumpumpe genutzt werden.

### Bezugszeichenliste

- 1: Trommel
- 2: Fluorierungskammer
- 3: Motor
- 4: Drehachse
- 5: Messinstrumente

- 6: Messinstrumente
- 7: Messinstrumente
- 8: Schaufel
- 9: Profilblech
- 10: Strebe

- 11: Querblech
- 12: Schütte
- 13: Fuß
- 14: Rücken
- 15: Profilblech

- 16: Entnahmeschaufel
- 17: Austrittsöffnung
- 18: Endstirnwand
- 19: Schleuse
- 20: Schleuse

- 21: Frontstirnwand
- 22: Steg
- 23: Schüttkante

## Patentansprüche

1. Vorrichtung zur kontinuierlichen Fluorierung von Partikeln, insbesondere Nanopartikeln mit einem eine Fluorierungskammer (2) aufweisenden Gehäuse, das eine horizontal verlaufende Längsachse, wenigstens einen Gasanschluss zum Einbringen von gasförmigem Fluor und eine Einrichtung zum Feinverteilen der Partikel in der Fluorierungskammer (2) und zum Transport der Partikel in Richtung der Längsachse durch die Fluorierungskammer (2) aufweist, wozu in dem Gehäuse mehrere, jeweils eine Vorder- und eine Rückseite aufweisende, in Längsrichtung ausgerichtete Schaufeln (8) in Längsrichtung hintereinander angeordnet sind und ein Antrieb vorgesehen ist, der die Schaufeln in eine um die Längsachse verlaufende Umlaufbewegung zu versetzen vermag, wobei die Schaufeln jeweils einen radial außen liegenden Fuß (13) mit Aufnahmebereichen zum Aufnehmen der Partikel beim Durchlaufen der Tiefphase und einen Kopf mit Schütten (12) zum Freigeben der Partikel beim Durchlaufen der Hochphase der Umlaufbewegung der Partikel besitzen, wobei jeweils Vorder- und Rückseite der Schaufeln zum Aufnehmen und Freigeben der Partikel ausgebildet sind und die Schütten an der Rückseite der Schaufeln jeweils in der Umlaufzone des zugehörigen Fußes liegen, **dadurch gekennzeichnet, dass** die Schütten an der Vorderseite der Schaufeln jeweils zumindest teilweise in die Umlaufzone der in Transportrichtung benachbart liegenden Schaufel ragen und dass der Antrieb reversierbar ist, so dass die Umlaufbewegung sowohl im als auch gegen den Uhrzeigersinn durchführbar ist.

2. Vorrichtung nach Anspruch 1, **dadurch gekennzeichnet, dass** der Aufnahmebereich an der Vorderseite der Schaufeln schmaler ist als der an der Rückseite der Schaufeln.

3. Vorrichtung nach Anspruch 1 oder 2, **dadurch gekennzeichnet, dass** das Gehäuse eine Trommel (1) ist, die liegend angeordnet ist, und dass die Schaufeln (8) jeweils mit ihrem Fuß (13) an der Innenseite der Trommel (1) derart ausgerichtet befestigt sind, dass der Kopf radial weiter innen liegt, und dass ein reversierbarer Antrieb für die Trommel vorgesehen ist, der diese in eine Drehbewegung um ihre Längsachse (4) versetzt.

4. Vorrichtung nach einem der Ansprüche 1 bis 3, **dadurch gekennzeichnet, dass** die Zufuhr der Partikel zur Fluorierungskammer (2) und deren Entnahme aus der Fluorierungskammer (2) über Schleusen (20, 19) erfolgt.

5. Vorrichtung nach einem der Ansprüche 2 bis 4, **dadurch gekennzeichnet, dass** wenigstens eine weitere Entnahmeschaufel (16) vorgesehen ist, deren Kopf in eine in der Endstirnwand (18) der Trommel (1) ausgebildete zentrale Austrittsöffnung (17) geführt ist.

6. Vorrichtung nach Anspruch 5, **dadurch gekennzeichnet, dass** sich an die Austrittsöffnung (17) eine Schleuse (19) anschließt.

7. Vorrichtung nach Anspruch 6, **dadurch gekennzeichnet, dass** sich in der Frontstirnseite (21) eine Eintrittsöffnung mit einer Schleuse (20) befindet und dass die Trommel (1) an eine Vakuumpumpe angeschlossen ist.

8. Vorrichtung nach einem der vorhergehenden Ansprüche, **dadurch gekennzeichnet, dass** der Boden der Schaufeln (8) und der Schütte (12) mit einem Haftbelag versehen ist.

## Claims

1. A device for continuous fluorination of particles, in particular nanoparticles, with a housing which has a fluorination chamber (2) and which has a horizontally extending longitudinal axis, at least one gas connection for introducing gaseous fluorine and a mechanism for dispersing the particles in the fluorination chamber (2) and for transporting the particles in the direction of the longitudinal axis through the fluorination chamber (2), for which purpose a plurality of vanes (8) which each have a front and a rear side and which are aligned in the longitudinal direction and arranged one behind the other in the longitudinal direction is provided in the housing as well as a drive which is able to set the vanes into a circulating movement about the longitudinal axis, wherein each of the vanes has a radially outwardly located foot (13) with receiving regions for receiving the particles when passing through the low phase and a head with chutes (12) for releasing the particles when passing through the high phase of the circulating movement of the particles, wherein each of the front and rear sides of the vanes are formed for receiving and releasing the particles and the chutes on the rear side of the vanes lie in each case in the circulating zone of the associated foot, **characterized in that** the chutes son the front side of the vanes protrude in each case at least partially into the circulating zone of the vane arranged adjacent in the transport direction and that the drive is reversible so that the circulating movement can be carried out in the clockwise as well as counterclockwise direction.

2. The device according to claim 1, **characterized in that** the receiving region on the front side of the vanes is narrower than the one son the rear side of the vanes.

3. The device according to claim 1 or claim 2, **characterized in that** the housing is a drum (1) which is arranged in lying position and that the vanes (8) are in each case fastened with their foot (13) to the inside of the drum (1) and aligned in such a manner that the head lies radially further inwardly, and that a reversible drive for the drum is provided which sets the drum in a rotational movement about its longitudinal axis (4).

4. The device according to any one of the claims 1 to 3, **characterized in that** the supply of particles to the fluorination chamber (2) and their removal from the fluorination chamber (2) takes place via locks (20, 19).

5. The device according to any one of the claims 2 to 4, **characterized in that** at least one further removal vane (16) is provided, the head of which is guided into a central outlet opening (17) formed in the end face wall (18) of the drum (1).

6. The device according to claim 5, **characterized in that** the outlet opening (17) connects to a lock (19),

7. The device according to claim 6, **characterized in that** there is an inlet opening with a lock (20) in the front face side (21) and that the drum (1) is connected to a vacuum pump.

8. The device according to any one of the preceding claims, **characterized in that** the bottom of the vanes (8) and the chute (12) is provided with an adhesive layer.

## Revendications

1. Dispositif pour la fluoration continue de particules, en particulier de nanoparticules comprenant un boîtier présentant une chambre de fluoration(2), qui présente un axe longitudinal agencé horizontalement, au moins un branchement de gaz pour l'introduction de fluor gazeux et un dispositif pour la répartition fine des particules dans la chambre de fluoration (2) et pour le transport des particules en direction de l'axe longitudinal par la chambre de fluoration (2), plusieurs ailettes (8) présentant respectivement un côté avant et un côté arrière, orientées dans le sens longitudinal, étant disposées à cet effet dans le boîtier dans le sens longitudinal les unes derrière les autres et un entraînement étant prévu, lequel est en mesure de mettre les ailettes dans un mouvement rotatif agencé autour de l'axe longitudinal, les ailettes présentant à chaque fois un pied (13) situé radialement à l'extérieur avec des zones de logement pour lie logement des particules lors du passage par la phase basse et une tête avec des glissières (12) pour la libération des particules lors du passage par la phase haute du mouvement rotatif des particules, le côté avant et le côté arrière des ailettes étant conçues à chaque fois pour le logement et la libération des particules et les glissières sur l'arrière des ailettes étant situées à chaque fois dans la zone de rotation du pied associé, **caractérisé en ce que** les goulottes sur le côté avant des ailettes dépassent à chaque fois au moins partiellement dans la zone de rotation de l'ailette située au voisinage dans le sens de transport et **en ce que** l'entraînement est réversible, de sorte que le mouvement de rotation peut être effectué aussi bien dans le sens des aiguilles d'une montre que dans le sens contraire.

2. Dispositif selon la revendication 1, **caractérisé en ce que** la zone de logement est plus étroite sur le côté avant des ailettes que sur le côté arrière des ailettes.

3. Dispositif selon la revendication 1 ou 2, **caractérisé en ce que** le boîtier est un tambour (1), qui est disposé horizontalement, et **en ce que** les ailettes (8) sont fixés à chaque fois avec leur pied (13) sur le côté intérieur du tambour (1) de telle sorte que la tête est située radialement davantage à l'intérieur, et **en ce qu'**il est prévu pour le tambour un entraînement réversible qui met celui-ci dans un mouvement de rotation autour de son axe longitudinal (4).

4. Dispositif selon l'une des revendications 1 à 3, **caractérisé en ce que** l'arrivée des particules à la chambre de fluoration (2) et leur prélèvement de la chambre de fluoration (2) s'effectue par des sas (20, 19).

5. Dispositif selon l'une des revendications 2 à 4, **caractérisé en ce qu'**au moins une autre ailette de prélèvement (16) est prévue, dont la tête est guidée dans une ouverture de sortie (17) centrale conçue dans la paroi avant d'extrémité (18) du tambour (1).

6. Dispositif selon la revendication 5, **caractérisé en ce qu'**un sas (19) se raccorde à l'ouverture de sortie (17).

7. Dispositif selon la revendication 6, **caractérisé en ce qu'**une ouverture d'entrée avec un sas (20) se trouve dans le côté avant frontal (21) et **en ce que** le tambour (1) est raccordé à une pompe à vide.

8. Dispositif selon l'une des revendications précédentes, **caractérisé en ce que** le fond des ailettes (8) et de la glissière (12) est doté d'un revêtement adhésif.
